# EUROPEAN PATENT SPECIFICATION

(11) **EP 0 977 785 B1**
(45) Date of publication and mention of the grant of the patent: **04.12.2002**
(21) Application number: 98918709.1
(22) Date of filing: 21.04.1998
(51) Int. Cl.: C08F 10/00, C08F 4/70

(54) **POLYMERIZATION OF OLEFINS**
POLYMERISATION VON OLEFINEN
POLYMERISATION D'OLEFINES

(30) Priority: 22.04.1997 US 44144 P
(43) Date of publication of application: 09.02.2000
(73) Proprietor: E.I. DU PONT DE NEMOURS AND COMPANY, Wilmington Delaware 19898 (US); UNIVERSITY OF NORTH CAROLINA AT CHAPEL HILL, Chapel Hill, NC 27599-4105 (US)
(72) Inventor: FELDMAN, Jerald, Hockessin, DE 19707 (US); HAUPTMAN, Elisabeth, Wilmington, DE 19809 (US); MCCORD, Elizabeth, Forrester, Hockessin, DE 19707 (US); BROOKHART, Maurice, S., III, Chapel Hill, NC 27514 (US)
(74) Representative: Jones, Alan John
(86) International application number: US9808320
(87) International publication number: WO98047934

(56) References cited:
- WO-A-96/23010
- WO-A-96/37522
- GB-A- 1 411 692
- US-A- 3 949 013
- US-A- 5 210 360

## Description

This application claims the benefit of U.S. Provisional Application No. 60/044,144, filed April 22, 1997.

### FIELD OF THE INVENTION

Cationic nickel complexes containing selected phosphine ligands can be used as part of polymerization catalysts for making polyethylene and certain copolymers of ethylene. Some of the polymers produced are novel.

### TECHNICAL BACKGROUND

Olefin polymers, including homo- and copolymers of ethylene are important items of commerce, billions of kilograms being produced annually, Polyolefins are useful in many applications, such as molding resins for various articles, films for packaging and construction, elastomers, etc. These polyolefins are often made by using various catalysts containing transition metals. Which catalyst is used often is important in determining what the structure of the resulting polymer is, and is an important part of the cost of the polymer. Therefore new polymerization catalysts for olefins which will produce new polymers and/or lower costs are constantly being sought.

G. Wilke in M. Tsutsui, Ed., Fundamental Research in Homogeneous Catalysis, Vol. 3, Plenum Press, New York, 1979, p. 1-24, at p. 15 reports the preparation of a "high molecular weight polyethylene" in which tris-t-butylphosphine and nickel are present.

European Patent Application 454,231 A2 describes certain late metal catalysts for olefin polymerization. The t-butyl containing phosphines described herein are not mentioned in this reference.

European Patent Application 381,495 A2 describes certain nickel ethylene polymerization catalysts containing an aminobis(imino)phosphorane ligand which make a polyethylene having only methyl and hexyl or longer branches. The catalysts and polymers described herein are not disclosed.

World Patent Applications WO 96/37552 and WO 96/37523 describe the polymerization of various olefins using certain metals in combination with certain bidentate ligands. Specific combinations of nickel compounds with the ligands disclosed herein are not mentioned.

World Patent Application WO 96/375536 describe compounds of Group VIIIB metals with certain Group VA element containing ligands. These compounds are said to be useful for making ethylene/carbon monoxide copolymers.

B. Bogdanovic, et al., Ind. Eng. Chem., vol. 62, p. 34-44 (1970) describe the use of certain nickel-phosphine compounds as catalysts for the dimerization, oligomerization, etc., of certain olefins. Preparation of polymers is not described.

U.S. Patent 3,265,622 describes a copolymer of ethylene and 4-methyl-1-hexene in which equal amounts of methyl and ethyl branches (as herein defined) may be present. There is no description of a polymer in which more than half the branches are ethyl.

WO-A-96/23010 describes polyolefins containing ethyl branches as part of sec-butyl ended branches, but the levels of such ethyl branches specifically disclosed in the reference are not as high as those herein.

### SUMMARY OF THE INVENTION

This invention concerns a first process for the manufacture of a polyolefin, comprising, forming a polymerization catalyst system by contacting in an inert liquid:
a first compound of the formula NiAQ (I) or L⁵L⁶NiAQ (VIII);
a second compound of the formula (t-butyl)₂PEP(t-butyl)₂ (II) or (t-butyl)₃P (III); and
a third compound W (IV), which is a neutral Lewis acid capable of abstracting A⁻ or Q⁻ to form the anion WA⁻ or WQ⁻, provided that WA⁻ or WQ⁻ is a weakly coordinating anion;
and contacting said polymerization catalyst system with ethylene or a mixture of ethylene and one or more of an α-olefin, internal olefin, cyclopentene, a norbornene, or a styrene, provided that:
said contacting with ethylene or a mixture of ethylene and an α-olefin, internal olefin, cyclopentene, a norbornene or a styrene is carried out at a temperature of about -20°C to about +70°C;
when (t-butyl)₃P is present one or more of an α-olefin, internal olefin, a styrene, a norbornene or cyclopentene is also present;
when neither of Q and A are hydrocarbyl or hydride W is capable of transferring a hydrocarbyl or hydride group to Ni;
and wherein:
L⁵ and L⁶ are each independently monodentate weakly coordinating neutral ligands or L⁵ and L⁶ taken together are a bidentate weakly coordinating neutral ligand;
Q is a monovalent anion;
A is monovalent anion; and
E is -CH₂-, -O-, or -NH-.

This invention also concerns a second process for the manufacture of a polyolefin, comprising, contacting in an inert liquid, at a temperature of about -20°C to about +70°C, a compound of the formula [L¹L²L³L⁴Ni]⁺X⁻ (VI) with ethylene or ethylene, and one or more of an α-olefin, internal olefin, cyclopentene, a norbornene, or a styrene, wherein:
L¹ and L² taken together are (t-butyl)₂PEP(t-butyl)₂ (II), L¹ and L² are both (t-butyl)₃P (III), or L¹ is (t-butyl)₃P (III) and L² is an empty coordination site, ethylene or a neutral monodentate ligand that can be displaced by ethylene;
E is -CH₂-, -O-, or -NH-;
L³ and L⁴ taken together are a π-allyl or a π-benzyl group; or L³ is ethylene and L⁴ is monoanionic -R¹R²; or L³ is a monoanionic group which may add across ethylene, and L⁴ is a neutral coordinating group which may be displaced by ethylene or L⁴ is an empty coordination site about nickel; or L³ and L⁴ taken together are a monoanionic oligomeric agostic group;
X is a relatively noncoordinating anion;
R¹ is a polymeric alkylene group; and
R² is a polymer end group;
and provided that when (t-butyl)₃P is present one or more of an α-olefin, internal olefin, cyclopentene, a norbornene or a styrene is also present.

This invention also includes a compound of the formula [L¹L²L³L⁴Ni]⁺X⁻ (VI) wherein:
L¹ and L² taken together are (t-butyl)₂PEP(t-butyl)₂ (II), or L¹ and L² are both (t-butyl)₃P (III), or L¹ is (t-butyl)₃P (III) and L² is an empty coordination site, ethylene or a neutral monodentate ligand that can be displaced by ethylene;
E is -CH₂-, -O-, or -NH-;
L³ and L⁴ taken together are a π-allyl or a π-benzyl group; or L³ is ethylene and L⁴ is monoanionic -R¹R²; or L³ is a monoanionic group which may add across ethylene, and L⁴ is a neutral coordinating group which may be displaced by ethylene or L⁴ is an empty coordination site about nickel; or L³ and L⁴ taken together are a monoanionic oligomeric agostic group;
X is a relatively noncoordinating anion;
R¹ is a polymeric alkylene group; and
R² is a polymer end group;
and provided that when (t-butyl)₃P is present a repeat unit derived from cyclopentene, a norbornene or a styrene is also present in R¹.

Also disclosed herein is a polyolefin containing ethyl branches, wherein at least 53 percent of said ethyl branches are part of sec-butyl ended branches, and provided that said polyolefin has at least 50 branches per 1000 methylene groups.

This invention also includes polyethylene or a copolymer of ethylene and one or more of an α-olefin, internal olefin, cyclopentene, a norbornene, or a styrene in which at least 53 percent of alkyl branches are ethyl branches, and provided that said ethylene or a copolymer of ethylene and a styrene or cyclopentene has at least about 1.0 branch per 1000 methylene groups.

Also disclosed herein is a copolymer of one or more norbornenes and ethylene containing at least about 2.0 methyl groups which are branch ends per one thousand methylene groups.

### DETAILS OF THE INVENTION

Herein certain terms are used to define certain chemical groups or compounds. These terms are defined below.
- A "hydrocarbyl group" is a univalent group containing only carbon and hydrogen. If not otherwise stated, it is preferred that hydrocarbyl groups herein contain 1 to about 30 carbon atoms.
- By "substituted hydrocarbyl" herein is meant a hydrocarbyl group which contains one or more substituent groups which are inert under the process conditions to which the compound containing these groups is subjected. The substituent groups also do not substantially interfere with the process. If not otherwise stated, it is preferred that substituted hydrocarbyl groups herein contain 1 to about 30 carbon atoms. Included in the meaning of "substituted" are heteroaromatic rings. Suitable substituents include halo, ester, keto (oxo), amino, imino, thioether, amide, and ether. Preferred substituents are halo, ester and ether.
- By an "α-olefin" is meant a compound of the formula CH2=CHR12, wherein R12 is saturated hydrocarbyl, preferably alkyl, and more preferably n-alkyl. It is preferred that R12 have I to 20 carbon atoms, more preferably 1 to 12 carbon atoms.
- By an "internal olefin" is meant a compound of the formula R13R14C=CR15R16 wherein R13 and R15 are each independently alkyl, and R14 and R16 are each independently alkyl or hydrogen. It is preferred that R14 and R16 are hydrogen. In the internal olefin it is preferred that any alkyl groups contain 1 to 20 carbon atoms, more preferably 1 to 10 carbon atoms.
- By an "inert liquid" which does not substantially interfere with active catalyst formation (if appropriate) or polymerization. The catalyst and/or catalyst ingredients and/or monomer(s) do not necessarily have to be soluble in the inert liquid but it is preferred that they be at least slightly soluble in the inert liquid. Suitable inert liquid for use herein include hydrocarbons, and perfluorocarbons. Specific useful inert liquids include toluene, benzene, cyclopentene (which may copolymerize), methylene chloride and hexane.
- By an "alkyl aluminum compound" is meant a compound in which at least one alkyl group is bound to an aluminum atom. Other groups such as alkoxide, oxygen, and halogen may also be bound to aluminum atoms in the compound.
- By "neutral Lewis base" is meant a compound, which is not an ion, which can act as a Lewis base. Examples of such compounds include ethers, amines, sulfides, and organic nitriles.
- By "neutral Lewis acid" is meant a compound, which is not an ion, and which can act as a Lewis acid.
- By a "neutral ligand" is meant a ligand which is not an ion, i.e., is electrically neutral.
- By "being able to be displaced by ethylene" is meant aligand that may be displaced from a coordinating metal atom by ethylene.
- By a "weakly coordinating ligand" is meant a ligand that is relatively easily displaced from a nickel atom, as by (II) or (III).
- By the "compound HX" is meant the acid of a (relatively) noncoordinating monbanion, or the equivalent thereof, i.e., a combination of compounds that will generate this acid. Noncoordinating anions are well known to the artisan, see for instance W. Beck., et al., Chem. Rev., vol. 88, p. 1405-1421 (1988), and S. H. Strauss, Chem. Rev., vol. 93, p. 927-942 (1993), both of which are hereby included by reference. Relative coordinating abilities of such noncoordinating anions are described in these references, Beck at p. 1411, and Strauss at p. 932, Table III. Also useful in this process in place of HX are "solid" acids, such as acidic aluminas, clays and zirconias, which are considered herein to be acids with relatively non-coordinating anions.

Preferred relatively noncoordinating anions X are BF₄-, PF₆-, BAF, {tetrakis[2,6-bis(trifluoromethyl)phenyl]borate}, trifluoromethanesulfonate, toluenesulfonate, and trifluoroacetate, and BAF is especially preferred. The acids of these anions are known, for instance HBF₄ is commercially available, and HBAF can be made by the method described in M. Brookhart, et al., Organometallics, vol. 11, p. 3920-3922 (1992).
- By a "π-allyl group" is meant a monoanionic with 3 adjacent sp2 carbon atoms bound to a metal center in an η³ fashion. The three sp2 carbon atoms may be substituted with other hydrocarbyl groups or functional groups. Typical π-allyl groups include 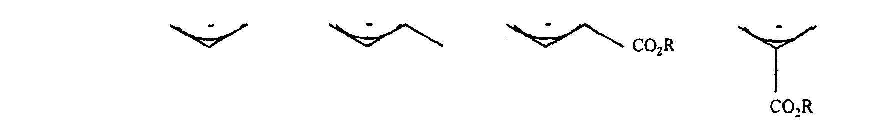 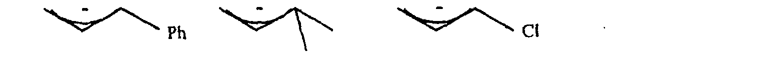 wherein R is hydrocarbyl.
- By a "π-benzyl group" is meant π-allyl ligand in which two of the sp² carbon atoms are part of an aromatic ring. Typical π-benzyl groups include

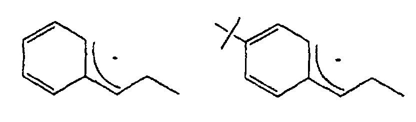

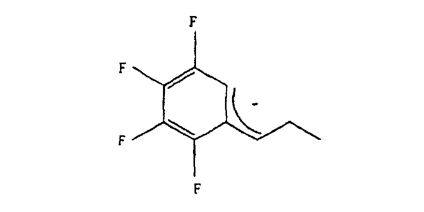

π-Benzyl compounds usually initiate polymerization of the olefins fairly readily even at room temperature, but π-allyl compounds may not necessarily do so. Initiation of π-allyl compounds can be improved by using one or more of the following methods:
- Using a higher temperature such as about 80°C.
- Decreasing the bulk of the α-diimine ligand. such as R² and R⁵ being 2,6-dimethylphenyl instead of 2,6-diisopropylphenyl.
- Making the π-allyl ligand more bulky, such as using 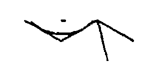 rather than the simple π-allyl group itself.
- Having a Lewis acid present while using a functional π-allyl or π-benzyl group. Relatively weak Lewis acids such a triphenylborane, tris(pentafluorophenyl)borane, and tris(3,5-trifluoromethylphenyl)borane, are preferred. Suitable functional groups include chloro and ester. "Solid" acids such as montmorillonite may also be used.

The olefins polymerized herein are ethylene, a styrene, a norbornene and cyclopentene. By "a styrene" herein is meant a compound of the formula 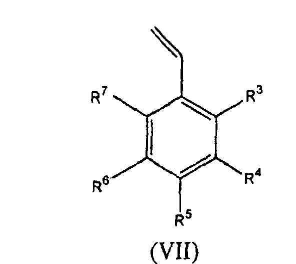 wherein R³, R⁴, R⁵, R⁶ and R⁷ are each independently hydrogen, hydrocarbyl, substituted hydrocarbyl or a functional group, all of which are inert in the polymerization process. It is preferred that all of R³, R⁴ R⁵, R⁶ and R⁷ are hydrogen, i.e. (VII) is styrene.

By "a norbornene" is meant that the monomer is characterized by containing at least one norbornene-functional group in its structure including norbornadiene as identified by the formulas below, which can be substituted or unsubstituted 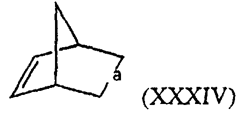 wherein "a" represents a single or double bond.

Representative monomers are compounds (XXXV) and (XXXX) as follows: 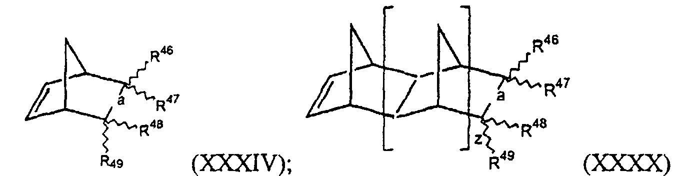 wherein R⁴⁶, R⁴⁷, R⁴⁸, and R⁴⁹ independently are hydrogen halogen, or hydrocarbyl, provided that. except if the hydrocarbyl group is vinyl, if any of the hydrocarbyl are alkenyl, there is no terminal double bond, i.e., the double bond is internal; or R⁴⁶ and R⁴⁸ taken together can be part of carbocyclic ring (saturated, unsaturated or aromatic); or R⁴⁶ and R⁴⁷ and/or R⁴⁸ and R⁴⁹ taken together are an alkylidene group. In these structures "z" is 1 to 5.

Examples of such norbomenes include norbornadiene, 2-norbornene, 5-methyl-2-norbornene, 5-hexyl-2-norbornene, 5-ethylidene-2-norbornene, vinylnorbornene, dicyclopentadiene, dihydrodicyclopentadiene, tetracyclododecene, trimers of cyclopentadiene, halogenated norbornenes wherein R⁴⁶, R⁴⁷, R⁴⁸ and R⁴⁹ may also be halogen or fully halogenated alkyl groups such as C_{w}F_{2w+1} wherein w is 1 to 20, such as perfluoromethyl and perfluorodecyl. It is also preferred that in the polymerization processes described herein that the polymer produced has an average degree of polymerization of about 10 or more, more preferably about 20 or more, and especially preferably about 50 or more.

When one or more norbornenes is copolymerized with ethylene a polymer having branching in the ethylene derived segments may be produced. This branching is easily detected by determining the amount of methyl groups in the polymer present in the ethylene derived polymer segments. That is, methyl groups that were originally part of a norbornene, such as in 4,5-dimethylnorbornene are not counted for the purposes of this branching. It is preferred that there are at least about 3.0, more preferably at least about 5.0 methyl groups per 1000 methylene groups (-CH₂-). It is also preferred that at least about 0.5 (per 1000 methylene groups) of the branches be ethyl branches, and/or at least about 1.0 of the branches be amyl or longer. These branches are readily detected by NMR methods described below.

In the first polymerization process for manufacturing an olefin, the compound NiAQ (I) may be used. This is a nickel[II] compound. Useful anions for A and Q are chloride, bromide, iodide, carboxylate such as octoate or acetate, and acetylacetonate. A preferred anion for A and Q is acetylacetonate. An alternative compound is L⁵L⁶NiAQ (VIII). Preferred A and Q anions in this compound are the same as listed above, plus alkyl, especially methyl, and hydride. L⁵ and L⁶ are weakly coordinating monodentate ligands or a bidentate ligand. For instance a useful compound (VIII) is (1,2-dimethoxyethane)NiBr₂. A useful monodentate ligand for L⁵ and L⁶ is tetrahydrofuran, while useful bidentate ligands include 1,2-dimethoxyethane, N,N,N'N'-tetramethylethylenediamine and 1,5-cyclooctadiene.

In (II) it is preferred that E is -CH₂-.

The molar ratio of (II):(I) or (III):(I) in the first polymerization process is not critical, since with any reasonable concentrations active catalysts will be formed. However, in order to most efficiently utilize the starting materials it is preferred that the molar ratio of (II):(I) is about 1, and the molar ratio of (III):(I) is about 1 to about 2.

The first polymerization process is carried out at a temperature of about 0°C to about 120°C, preferably about 25°C to about 100°C, when (II) is present, while the temperature is about -80°C to about 100°C, preferably about 0°C to about 80°C when (III) is present. It is also preferred that the process mixture be stirred for uniform and reasonably rapid polymerization. The (ethylene) pressure in the first polymerization process is not critical, atmospheric pressure to about 150 MPa being a useful pressure range.

The third compound in the first polymerization process, W, is a neutral Lewis acid that can abstract A⁻ or Q⁻ from (I) to form WA⁻ or WQ⁻, respectively. An equation may be written as:

NiAQ + W → [NiA]⁺[WQ]⁻ (1)

Useful Lewis acids for this abstraction include B(C₆F₅)₃, AlCl₃, MgCl₂ and methyl aluminoxane. If a hydrocarbyl anion, preferably an alkyl anion, more preferably a methyl anion, or a hydride anion is not bound to the nickel atom of (I), W (or another W) must also transfer a hydrocarbyl or hydride anion to the nickel atom. Such an equation, using for instance and alkyl aluminum compound as W, may be written as:

NiAQ + R₂ ⁹AlCl → [NiR⁹]⁺ [R⁹AlClAQ]⁻ (2)

This equation is shown using only one molecule of R₂⁹AlCl. Essentially the same effect can be obtained by using one molecule of the alkyl aluminum compound to place the R⁹ group on the nickel, and another molecule to abstract the A anion. Preferred neutral Lewis acids for transferring a hydrocarbyl group to the nickel atom are alkyl aluminum compounds. Suitable alkyl aluminum compounds include alkyl aluminum sesquioxides [(R⁸AlO)ₙ], especially wherein R⁸ is methyl. Alkylaluminum sesquioxides are preferred alkyl aluminum compounds. W can also constitute a mixture of two compounds, a strong Lewis acid such as B(C₆F₅)₃ and an alkylating agent such as triethylaluminum. A stoichiometric or larger amount of the neutral Lewis acid is preferred, and a more preferred molar ratio of W:(I) is about 1 to about 100.

The ethylene may be copolymerized with cyclopentene and/or a styrene. Styrene itself is a preferred styrenic monomer. Increasing the concentration of a comonomer (with ethylene) will usually increase the amount of repeat derived from that comonomer in the product polymer.

In the second polymerization process herein the same conditions are preferred as are preferred for the first polymerization process, including the monomers used and polymers produced. It is preferred that the second polymerization process be carried out in an inert liquid, but may also be carried out by other methods, such as heterogeneously from a liquid or solid and a gas such as ethylene, or living polymer particles and a gas such as ethylene. The catalyst or active polymerization site may be on a support such as alumina or zirconia. Such methods of carrying out olefin polymerizations are known in the art.

In the second polymerization process compound (VI) is used as the polymerization catalyst. (VI) may be added directly to the polymerization process, may be formed in situ before the polymerization starts, or may be formed after the polymerization starts, i.e., is a polymerization intermediate. Methods for making (VI) are analogous to those reported in World Patent Application 96/23010, published August 1, 1996. In that Application nickel complexes of α-diimines of other nitrogen ligands are made for use in polymerizations. The analogous complexes of (II) and (III) can be made by methods similar to those described in WO 96/23010.

For instance, equation (2) above shows the partial formation of a compound of formula (VI). In the presence of (II) or (III), (II) or (III) would become L¹ and L² of (VI), R⁹ is L³, a monoanionic group which can add across ethylene, and L⁴ is an empty coordination site about nickel. If the reaction of equation (2) were carried out in a solvent such as diethyl ether, the ether may become L⁴, a neutral coordinating group which may be displaced by ethylene.

Methods for making (VI) include:
Reaction of the compound 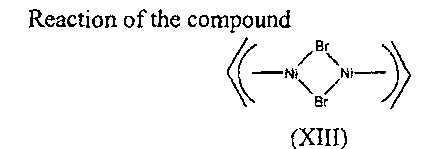 with either (II) or (III) and MX, wherein M is monovalent metal such as sodium and X is a relatively non-coordinating anion.

Reaction of (tmeda)NiMe₂ with (II), followed by reaction either HX (wherein X is a relatively non-coordinating anion) or a Lewis base which can form a relatively non-coordinating anion upon abstraction of methyl, such as B(C₆F₅)₃.

Groups which are anionic and can add across ethylene or other olefins include hydrocarbyl including allyl, benzallyl and vinyl, and hydride. Preferred groups which can add across ethylene or other olefins are alkyl containing 1 to 4 carbon atoms and hydride, and methyl is especially preferred.

When L³ is ethylene and L⁴ is monoanionic -R¹R², (VI) may be represented as 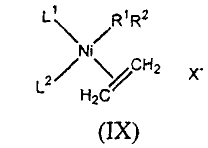 and may be thought of as a "living" polymer. The R² group, which is the end group for a polymer "fragment" -R¹R² may be thought of as arising from the original group on nickel which added across an ethylene (or other olefin) molecule. The R¹ part of the molecule is one or more repeat units of a polymer (or incipient polymer) such an ethylene repeat units, for example represented by the formula -(CH₂CH₂)ₓ- wherein x is an integer of 1 or more. The ethylene molecule coordinated to the nickel atom in (IX) may add across the Ni-R¹ bond, and another olefin molecule may coordinate to the nickel atom, thereby continuing the polymerization.

Another potential form of living ended polymer is a so-called agostic living end. This may be of the type 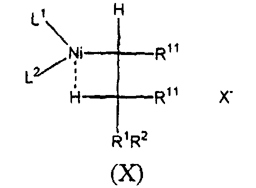 wherein each R¹¹ is independently hydrocarbyl or substituted hydrocarbyl. It is believed that this form of living end may be favored when the olefin end group is a cyclic olefin such as cyclopentene, and both of R¹¹ taken together form a ring. For instance if the end group were derived from cyclopentene, both of R¹¹ taken together would be -(CH₂)₃-.

When (III) is used in a catalyst system herein to make polyethylene or a copolymer of ethylene, the polymer may have an exceptionally high proportion of ethyl branches. When (III) is present in the catalyst system, homopolyethylene may be produced, as well as copolymers of ethylene. The homopolyethylenes are produced in essentially the same way as the ethylene copolymers. Completely linear homopolyethylene of course has no branches, but if one makes branched homopolyethylene, it usually has a distribution of branches containing 1 to many carbons. Although ethyl branches are often found in such polymers, they usually don't constitute a high percentage of the total branches present (for a method of measuring and calculating branch numbers and size, see the section on NMR polymer analysis just before the Examples). Some of the polymers made by catalysts containing (II) have been found to contain an exceptionally high proportion of ethyl branches. Novel polymers herein have at least about 1.0 or more total branches, preferably at least about 5 or more total branches per 1000 methylene groups, and at least about 50 percent of those branches, preferably at least about 65 percent of those branches are ethyl branches. Note that the percentage of ethyl branches is based on the total number of branches (methyl groups) including ethyl groups present, and not on the total number of carbon atoms in the total branches or ethyl branches present.

When (II) is used in the catalysts described herein to make homopolyethylene or copolymers of polyethylene the resulting polymers sometimes have an exceptionally large proportion of ethyl branches in sec-butyl [-CH(CH₃)CH₂CH₃] ended branches. For a definition of "branch" herein see below. The sec-butyl group may be on the end of a branch such as 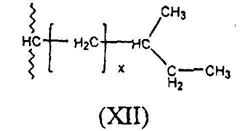 wherein 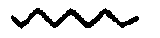 represents the "main chain" (in highly branched polymers what is the "main chain" may be more of a semantic argument) of the polymer, and x is an integer of 2 or more. Such polymer may have about 50 or more total branches, preferably about 75 to about 160 total branches per 1000 methylene groups, and at least about 53% percent of the ethyl branches present, preferably at least about 58 percent of those ethyl branches are part of sec-butyl ended branches.

The polyethylenes with relatively high level of sec-butyl ended branches or ethyl branches may be homopolyethylenes or copolymers of ethylene with cyclopentene and/or a styrene. Neither the pendant phenyl rings nor the cyclic units derived from cyclopentene shall be considered "branches" for the purposes of calculating amounts of branches and branch types in these polymers. Similarly, if a styrene has one or more alkyl groups substituted on the phenyl ring, these alkyl groups are not considered branches or parts of branches.

The polymerization processes herein may be run in the presence of various liquids, particularly aprotic organic liquids. The catalyst system, ethylene, and polyethylene may be soluble or insoluble in these liquids, but obviously these liquids should not prevent the polymerization from occurring. Suitable liquids include alkanes, cycloalkanes, selected halogenated hydrocarbons, and aromatic hydrocarbons. Specific useful solvents include hexane, toluene and benzene.

The ethylene polymerizations herein may also initially be carried out in the solid state by, for instance, supporting the transition metal compound on a substrate such as silica or alumina, activating it (if necessary) with the Lewis (such as W, for instance an alkylaluminum compound) or Bronsted acid and exposing it to ethylene. Alternatively, the Lewis acid such as an alkylaluminum compound may be reacted first with a support such as silica or a magnesium halide and then the transition metal containing compound added. The support may also be able to take the place of the Lewis or Bronsted acid, for instance an acidic clay such as montmorillonite. Another method of making a supported catalyst is to start a polymerization or at least make a transition metal complex of another olefin or oligomer of an olefin such as cyclopentene on a support such as silica or alumina. These "heterogeneous" catalysts may be used to catalyze polymerization in the gas phase or the liquid phase. By gas phase is meant that the ethylene is transported to contact with the catalyst particle while the ethylene is in the gas phase.

The polymerization catalyst systems described above may be used in conjunction with other types of polymerization catalysts. This could include two different polymerization catalysts as described above, but more commonly other types of catalysts may also be used for the second active polymerization catalyst. For instance so-called Ziegler-Natta and/or metallocene-type catalysts may also be used. These types of catalysts are well known in the polyolefin field, see for instance Angew. Chem., Int. Ed. Engl., vol. 34, p. 1143-1170 (1995), European Patent Application 416,815 and U.S. Patent 5,198,401 for information about metallocene-type catalysts, and J. Boor Jr., Ziegler-Natta Catalysts and Polymerizations, Academic Press, New York, 1979 for information about Ziegler-Natta-type catalysts, all of which are hereby included by reference. Suitable late metal transition catalysts will be found in World Patent Applications 96/23010 and 97/02298, both of which are hereby included by reference, and U.S. Patent Applications 08/991,372, filed December 16, 1997, and 09/006,536, filed January 13, 1998, both of which are hereby included by reference. Many of the useful polymerization conditions for these types of catalyst and the first active polymerization catalysts coincide, so conditions for the polymerizations with first and second active polymerization catalysts are easily accessible. Oftentimes the "co-catalyst" or "activator" is needed for metallocene of Ziegler-Natty-type polymerizations, much as W is sometimes needed for polymerizations using the first active polymerization catalysts. In many instances the same compound, such as an alkylaluminum compound, may be used for these purposes for both types of polymerization catalysts.

The polymers made by the first active polymerization catalyst and the second active polymerization catalyst may be made in sequence, i.e., a polymerization with one (either first or second) of the catalysts followed by a polymerization with the other catalyst, as by using two polymerization vessels in series. However it is preferred to carry out the polymerization using the first and second active polymerization catalysts in the same vessel(s), i.e., simultaneously. This is possible because in most instances the first and second active polymerization catalysts are compatible with each other, and they produce their distinctive polymers in the other catalyst's presence.

The polymers produced by using two or more polymerization catalysts may vary in molecular weight and/or molecular weight distribution and/or melting point and/or level of crystallinity, and/or glass transition temperature or other factors. For copolymers the polymers may differ in ratios ofcomonomers if the different polymerization catalysts polymerize the monomers present at different relative rates.

The olefin monomer(s) may also be a single olefin or a mixture of olefins to make a copolymer. Again it is preferred that they be identical, particularly in a process in which polymerization by the first and second polymerization catalysts make polymer simultaneously. In some processes with two or more catalysts a first active polymerization catalyst may polymerize a monomer that may not be polymerized by a second active polymerization catalyst, and/or vice versa. In that instance two chemically distinct polymers may be produced. In another scenario two monomers would be present, with one polymerization catalyst producing a copolymer, and the other polymerization catalyst producing a homopolymer, or two copolymers may be produced which vary in the molar proportion or repeat units from the various monomers. Other analogous combinations will be evident to the artisan.

In the Examples, and in general, the following procedure was used to quantitatively determine branching, the distribution of branch lengths in the polymers (but not necessarily the simple number of branches as measured by total number of methyl groups per 1000 methylene groups), and other microstructure information about the polymers described herein. 100 MHz ¹³C NMR spectra were obtained on a Varian Unity 400 MHz spectrometer using a 10 mm probe on typically 10-20 wt% solutions of the polymers and 0.05 M Cr(acetylacetonate)₃ in 1,2,4-trichlorobenzene (TCB) unlocked at 120-140°C using a 90 degree pulse of 16 to 18 µsec, a spectral width of 35 kHz, a relaxation delay of 5-10 s, an acquisition time of 0.64 sec and inverse gated decoupling. Samples were preheated for at least 15 min before acquiring data. Data acquisition time was typically 10 h per sample. The T¹ values of the carbons were measured under these conditions to be all less than 0.9 s. The longest T¹ measured was for the Bu⁺, end of chain resonance at 14 ppm, which was 0.84 s. Some samples were run in chloroform-d1, CDCl₃-d1, (locked) at 30°C under similar acquisition parameters. T¹'s were also measured in CDCl₃ at ambient temperature on a typical sample with 0.05 M Cr(acetylacetonate)₃ to be all less than 0.68 s. Spectra are referenced to the solvent - either the TCB high field resonance at 127.9 ppm or the chloroform-d1 triplet at 77 ppm. A DEPT 135 spectrum was done on most samples to distinguish methyls and methines from methylenes. Methyls were distinguished from methines by chemical shift. EOC is end-of-chain. Assignments reference to following naming scheme:
1. xBy: By is a branch of length y carbons; x is the carbon being discussed, the methyl at the end of the branch is numbered 1. Thus the second carbon from the end of a butyl branch is 2B4. Branches of length y or greater are designated as y⁺.
2. xCBy: CBy is a comonomer ended branch containing y methylenes between the 'blocking carbon' (quaternary carbon, non-protonated carbon) and the next nearest methine away from the functional group. x is the carbon being discussed; the methylene closest to the blocking carbon is labeled 1.
3. The methylenes in the backbone are denoted by a capital S and with Greek letters which determine how far from a branch point methine each methylene is. Thus S beta beta denotes the central methylene in the following structure: RCHRCH₂CH₂CH₂CHRR. Gamma+ refers to methylenes gamma arid further from a branch point.
4. When x in xBy or xCBy is replaced by a T, the methine carbon of that branch is denoted.
5. A T followed by two Greek letters indicates a methine carbon and how far away the next methine is. An M followed by two Greek letters indicates a methyl branch and the distance to the two neighboring branch points. For example, the methyls and methines in a highly stereo-regular polypropylene would be denoted P beta beta and T beta beta.

Integrals of unique carbons in each branch were measured and were reported as number of branches per 1000 methylenes (including methylenes in the backbone and branches, and in comonomer ended branches). These integrals are accurate to +/- 5% relative for abundant branches and +/- 10 or 20% relative for branches present at less than 10 per 1000 methylenes.

Such types of analyses are generally known, see for instance "A Quantitative Analysis of Low Density (Branched) Polyethylenes by Carbon-13 Fourier Transform Nuclear Magnetic Resonance at 67.9 MHz", D. E. Axelson, et al., Macromolecules 12 (1979) pp. 41-52; "Fine Branching Structure in HighPressure, Low Density Polyethylenes by 50.10-MHz 13C NMR Analysis", T. Usami et al., Macromolecules 17 (1984) pp. 1757-1761; and "Quantification of Branching in Polyethylene by 13C NMR Using Paramagnetic Relaxation Agents", J. V. Prasad, et al., Eur. Polym. J. 27 (1991) pp. 251-254 (Note that this latter paper is believed to have some significant typographical errors in it).

It is believed that in many of the polymers described herein which have unusual branching, i.e., they have more or fewer branches than would be expected for "normal" coordination polymerizations, or the distribution of sizes of the branches is different from that expected, that "branches on branches" are also present. By this is meant that a branch from the main chain on the polymer may itself contain one or more branches. It is also noted that the concept of a "main chain" may be a somewhat semantic argument if there are sufficient branches on branches in any particular polymer.

By a polymer hydrocarbyl branch is meant a methyl group to amethine or quaternary carbon atom or a group of consecutive methylenes terminated at one end by a methyl group and connected at the other end to a methine or quaternary carbon atom. The length of the branch is defined as the number of carbons from and including the methyl group to the nearest methine or quaternary carbon atom, but not including the methine or quaternary carbon atom. If the number of consecutive methylene groups is "n" then the branch contains (or the branch length is) n+1. Thus the structure (which represents part of a polymer) -CH₂CH₂CH[CH₂CH₂CH₂CH₂CH(CH₃)CH₂CH₃]CH₂CH₂CH₂CH₂- contains 2 branches, a methyl and an ethyl branch.

The ¹³C NMR peaks for copolymers of cyclopentene and ethylene are described based on the labeling scheme and assignments of A. Jerschow et al, Macromolecules 1995, *28*, 7095-7099. The triads and pentads are described as 1-cme, 1,3-ccmcc, 1,3-cmc. 2-cme, 2-cmc, 1,3-eme,3-cme, and 4,5-cmc, etc, where e = ethylene, c = cyclopentene, and m = meta cyclopentene (i.e. 1,3 enchainment).

The compound (t-Bu)₂PCH₂P(t-Bu)₂ can be synthesized according to the following published procedure: Karsch, H. H. and Schmidbaur, *Z. Naturforsch*. 1977, *32b*, 762. P(t-Bu)₃ can be purchased from Strem Chemicals (Newburyport, MA, U.S.A.). Ni(acac)₂ (acac = acetylacetonate) can be purchased from the Aldrich Chemical Company (Milwaukee, WI, U.S.A.).

In the Examples, the following abbreviations are used:
acac - acetylacetonate
Bu - butyl
DME - 1,2-dimethoxyethane
GPC - Gel Permeation Chromatography
Me - methyl
Mn - number average molecular weight
Mw - weight average molecular weight
PD - polydispersity, Mw/Mn
PE - polyethylene
TCB - trichlorobenzene
TCE - trichloroethylene
tmeda - N,N,N',N'-tetramethylethylenediamine

In the Examples, all pressures are gauge pressures unless otherwise noted.

### Example 1

An evacuated 100 mL autoclave was charged with a solution of Ni(acac)₂ (26 mg, 0.10 mmol) and (t-Bu)₂PCH₂P(t-Bu)₂ (30 mg, 0.10 mmol) in 40 mL of toluene under nitrogen. To this mixture was then added modified methyl aluminoxane (5.00 mmol) in toluene (10 mL) under 690 kPa of ethylene. The resulting reaction mixture was stirred at 700 rpm under 690 kPa of ethylene for 18.5 h. During this time the reaction temperature remained at 29-30°C. Ethylene pressure was then vented and the reaction mixture quenched under air by the addition of 50 mL of isopropanol. The resulting mixture was then stirred in a beaker with 100 mL of methanol plus 10 mL concentrated HCl. Finally, 200 mL of water was added and an oil separated from the solution. The mixture was then transferred to a separatory funnel and the oil separated from the aqueous phase. The aqueous phase was extracted with 3 x 100 mL of hexane, and the hexane extracts combined with the oil. The resulting solution was dried (MgSO₄) and concentrated *in vacuo* to afford 13.4 g of amorphous polyethylene as a viscous, clear, colorless oil. The branching distribution was quantified by ¹³C NMR. Branching per 1000 CH₂: Total methyls (139), Methyl (82), Ethyl(22.3), Propyl (2.1), Butyl (9.7), Amyl (0.9), ≥Hex and end of chains (21.6), ≥Am and end of chains (23.8), ≥Bu and end of chains (32.6). DSC: Tₘ = -42°C, T_{g} = -67°C. GPC (in tetrahydrofuran vs. polystyrene): Mₙ = 11,400; M_{w} = 16,800; M_{w}/Mₙ = 1.47.

The following Table gives the ¹³C NMR spectrum of the polymer obtained, together with known assignments.

| Freq., ppm | Intensity | Assignment |
|---|---|---|
| 39.4051 | 7.12974 | TB₂ |
| 38.1797 | 10.2339 | TB₃₊ |
| 37.9251 | 19.6593 | TB₃₊ |
| 37.3468 | 72.0106 | αB₁ |
| 36.933 | 10.6657 | αB₁ |
| 36.8376 | 14.7646 | αB₁ |
| 34.6201 | 40.7385 | αB₃₊ |
| 34.3071 | 63.741 | αB₃₊ |
| 33.8084 | 16.4293 | αB₂ |
| 33.4212 | 15.7924 | TB₁ |
| 33.2992 | 16.5907 | TB₁ |
| 33.0286 | 34.9315 | TB₁ |
| 32.0419 | 39.6259 | 3B₆₊,EOC |
| 31.453 | 12.4449 | S_{γ+γ+} |
| 31.1719 | 8.14437 | S_{γ+γ+} |
| 30.705 | 9.12849 | S_{γ+γ+} |
| 30.3284 | 61.7699 | S_{γ+γ+} |
| 30.217 | 73.5024 | S_{γ+γ+} |
| 29.8509 | 250.96 | S_{γ+γ+} |
| 29.6759 | 31.0386 | S_{γ+γ+} |
| 29.4425 | 36.4805 | S_{γ+γ+} |
| 29.3045 | 9.53641 | S_{γ+γ+} |
| 27.6388 | 27.4994 | βB₂₊ |
| 27.2674 | 80.5914 | βB₂₊ |
| 27.103 | 61.525 | βB₂₊ |
| 26.4876 | 9.23749 | 2B₂ |
| 24.5036 | 8.03974 | Sββ |
| 23.2463 | 7.77601 | 2B₄ |
| 23.1243 | 10.7292 | 2B₄ |
| 22.7529 | 41.6614 | 2B₅₊,EOC |
| 19.9148 | 36.4105 | 1B₁ |
| 19.8299 | 63.4362 | 1B₁ |
| 19.2994 | 15.9458 | 1B₁ |
| 14.0263 | 49.8156 | 1B₄₊,EOC |
| 11.3049 | 18.708 | 1B₂ in sec-butyl ended branch |
| 11.0662 | 12.3209 | other 1B₂ |

### Example 2

An evacuated 100 mL autoclave was charged with a solution of Ni(acac)₂ (18 mg, 0.07 mmol) and P(t-Bu)₃ (29 mg, 0.14 mmol) in 42 mL of toluene under nitrogen. To this mixture was then added modified methyl aluminoxane (3.5 mmol) in toluene (10 mL) under 690 kPa of ethylene. The resulting reaction mixture was stirred at 7 min. During this time the reaction temperature increased from 27 to 45°C. Ethylene pressure was then vented and the reaction mixture quenched and the product precipitated by the addition of 25 mL of isopropanol under air. The resulting mixture was transferred to a beaker and stirred with 100 mL of methanol plus 10 mL concentrated HCI. The product polymer was filtered off and washed with methanol and a 2 wt. % solution of Irganox® 1010 in acetone. The polymer was dried to afford 4.07 g of polyethylene as a white powder. DSC: Tm = 105°C (ΔH_{f}= 74 J/g). Quantitative ¹³C NMR indicated that this sample contained 26 methyl-ended branches per 1000 methylenes. The distribution of branches was as follows (branches per 1000 methylenes): Methyl (∼0), Ethyl (20.8), Propyl (not determined). Butyl (2.5), Amyl (.1), ≥Hexyl and end of chains (1.8), ≥Amyl and end of chains (2.1), ≥Butyl and end of chains (5.2). DSC: Tₘ = 105°C (74 J/g). GPC (in tetrahydrofuran vs. polystyrene): Mₙ = 6,210; M_{w} = 15,000; M_{w}/Mₙ = 2.42.

The following Table gives the ¹³C NMR spectrum of the polymer obtained, together with known assignments.

| Freq., ppm | Intensity | Assignment |
|---|---|---|
| 39.3998 | 74.433 | TB₂ |
| 37.8614 | 9.54041 | TC₄₊ |
| 36.4815 | 7.48647 | |
| 36.0206 | 5.10547 | |
| 34.2753 | 36.8623 | αB₃₊ |
| 33.7978 | 147.412 | αB₂ |
| 32.0684 | 9.32863 | 3B₆₊,EOC |
| 31.1507 | 6.96529 | S_{γ+γ+} |
| 30.7889 | 9.27517 | S_{γ+γ+} |
| 30.5396 | 42.2551 | S_{γ+γ+} |
| 30.3549 | 168.212 | S_{γ+γ+} |
| 29.8881 | 2790 | S_{γ+γ+} |
| 29.4637 | 30.7565 | S_{γ+γ+} |
| 29.3205 | 17.8627 | S_{γ+γ+} |
| 29.1189 | 10.7842 | S_{γ+γ+} |
| 28.1905 | 7.1426 | |
| 27.1136 | 154.015 | βB₂₊ |
| 26.4876 | 73.2428 | 2B₂ |
| 23.2887 | 10.2333 | 2B₄ |
| 22.7954 | 8.27474 | 2B₅₊,EOC |
| 14.1006 | 11.9735 | 1B₄₊,EOC |
| 12.6046 | 6.22117 | methyl of cis-2,3 unsaturated ends |
| 11.0784 | 78.8489 | 1B₂ |

### Example 3

A 100 mL autoclave was charged with a solution of Ni(acac)₂ (73 mg, 0.28 mmol) and P(t-Bu)₃ (115 mg, 0.57 mmol) in cyclopentene (50 mL). To this mixture was then added modified methyl aluminoxane (14.2 mmol) in toluene (7 mL) under 690 kPa of ethylene. The reaction mixture was stirred under 690 kPa of ethylene for 30 min, during which time the reaction temperature varied between 27 and 46°C. Ethylene pressure was then vented and the reaction worked up using the same procedure as in Example 2 to afford 5.03 g of ethylene/cyclopentene copolymer as a white solid. Quantitative ¹³C NMR indicated that the polymer contained 46.7 mole % ethylene, 8.3 mole % cis-1,2-enchained cyclopentene, and 45.0 mole % cis-1,3-enchained cyclopentene units.

### Example 4

A 100 mL autoclave was charged with a solution of Ni(acac)₂ (18 mg, 0.07 mmol), P(t-Bu)₃ (29 mg, 0.14 mmol), cyclopentene (10 mL, 114 mmol), and toluene (32 mL). To this mixture was then added modified methyl aluminoxane (3.54 mmol) in toluene (10 mL) under 690 kPa of ethylene. The reaction mixture was stirred under 690 kPa of ethylene for 7 min, during which time the reaction temperature varied between 23 and 39°C. Ethylene pressure was then vented and the reaction worked up using the same procedure as in Example 2 to afford 3.94 g of ethylene/cyclopentene copolymer as a white solid. DSC: Tm = 85°C (41 J/g). Quantitative ¹³C NMR indicated that the polymer contained 81.8 mole % ethylene, 4.7 mole % cis-1,2-enchained cyclopentene, and 13.4 mole % cis-1,3-enchained cyclopentene units. GPC (in trichlorobenzene vs. polyethylene): Mₙ = 14,000; M_{w} = 28,900; M_{w}/Mₙ = 2.07.

### Example 5

A 100 mL autoclave was charged with a solution of Ni(acac)₂ (73 mg, 0.28 mmol), P(t-Bu)₃ (115 mg, 0.57 mmol), styrene (5.00 g, 48.0 mmol), and toluene (50 mL). To this mixture was then added modified methyl aluminoxane (14.2 mmol) in toluene (7 mL) under 690 kPa of ethylene. The reaction mixture was stirred under 690 kPa of ethylene for 11 min, during which time the reaction temperature varied between 27 and 39°C. Ethylene pressure was then vented and the reaction mixture quenched by addition of 50 mL of isopropanol under air. The resulting mixture was transferred to a beaker with 200 mL methanol plus 20 mL concentrated HCl. The precipitated polymer was filtered, washed further with methanol, and dried to afford 2.50 g of ethylene/styrene copolymer. DSC: Tm = 86°C (45 J/g). GPC (trichlorobenzene vs. linear polyethylene, 135°C): Mn = 17,700; Mw = 34,900; PD = 1.98. Quantitative ¹³C NMR indicated that the copolymer contained 91.7 mole % ethylene and 8.3 mole % styrene units. 1.8 ethyl branches per 1000 methylene groups were also observed.

The following Table gives the ¹³C NMR spectrum of the polymer obtained, together with known assignments.

| Freq., ppm | Intensity | Assignment |
|---|---|---|
| 46.2925 | 38.546 | TCB₀ |
| 39.4749 | 2.6182 | TB₂ |
| 37.0484 | 74.6019 | αCB₀ |
| 33.8626 | 5.23511 | αB₂ |
| 32.0202 | 2.11257 | 3B₆₊,EOC |
| 29.8432 | 697.5 | S_{γ+γ+} |
| 27.7406 | 73.023 | βCB₀ |
| 27.5388 | 10.9542 | βCB₀ |
| 27.13 | 5.9223 | βB₂ |
| 26.5512 | 2.82403 | 2B₂ |
| 13.978 | trace | 1B₄₊,EOC |
| 11.0629 | 2.58228 | 1B₂ |

### Example 6

A 100 mL autoclave was charged with a solution of Ni(acac)₂ (73 mg, 0.28 mmol), P(t-Bu)₃ (115 mg, 0.57 mmol), methyl-4-vinylbenzoate (1.00 g, 6.2 mmol), and toluene (50 mL). To this mixture was then added modified methyl aluminoxane (14.2 mmol) in toluene (7 mL) under 210 kPa of ethylene. The reaction mixture was stirred under 210 kPa of ethylene for 1 h, during which time the reaction temperature varied between 25 and 28°C. Ethylene pressure was then vented and the reaction worked up by the same procedure used in Example 5. The precipitated polymer was filtered, washed further with methanol, and dried to afford 0.93 g of ethylene/methyl-4-vinylbenzoate copolymer. DSC: Tm = 115°C (114 J/g). GPC (trichlorobenzene vs. linear polyethylene, 135°C): Mn = 2,620; Mw = 10,700; PD = 4.10. Quantitative ¹³C NMR indicated that the copolymer contained 99.3 mole % ethylene and 0.7 mole % methyl-4-vinylbenzoate units.

### Experiment 1

### Synthesis of (^{t}Bu)₂PCH₂P(^{t}Bu)₂

An oven dried 500 mL round bottom Schlenk flask was charged with 4.4 g of (t-Bu)₂PCH₂Li (see below), 200 mL of THF, and the resulting yellow solution cooled to -78°C. (t-Bu)₂PCl (5.0 mL, 5.7 g, 1.2 equiv.) was added via syringe to the stirred solution over a 10 min period. The reaction mixture was allowed to stir at -78°C for 2h, then warm to ambient temperature. A condenser was attached to the flask and the mixture heated to reflux for 24 h. After this time the reaction mixture was allowed to cool to ambient temperature and the volatiles materials were removed *in vacuo*. The product was extracted with 3 x 30 mL of hexanes and filtered through a pad of Celite® under N₂. The hexanes were removed to yield 7.85 g (97%) of a viscous yellow liquid. The only impurity detected by ¹H NMR was represented by small multiplet at δ 1.05 ppm. A single resonance in the ³¹P{¹H} NMR at δ 18.9 ppm was observed. A crystalline product was obtained by filtering a solution of 1.1 g of the above product in 20 mL of hexanes through a pad of basic Al₂O₃, eluting with additional hexanes, and removing the volatile materials to give 0.95 g of clear, waxy crystals.

(t-Bu)₂PCH₂Li In the drybox a 200 mL round bottom Schlenk flask was charged with 15.9 g of (t-Bu)₂PCH₃ (see below) and 40 mL of hexanes. t-BuLi (58.6 mL of a 1.7 M solution, 1.0 equiv), was added via syringe. The reaction mixture was heated to reflux for 9 d. During this time an off white solid had formed which was isolated on a medium porosity frit, washed with 2 x 5 mL of pentane, and dried *in vacuo* to yield 4.4 g of (t-Bu)₂PCH₂Li. The filtrate was returned to the reaction flask, 40 mL of methylcyclohexane added and the mixture heated to reflux. After 2 d reflux an additional 3.8 g of (t-Bu)₂PCH₂Li was isolated. NOTE: This material and the filtrate are extremely pyrophoric and should be handled with extreme caution. ¹H NMR (THF-d₈): δ 0.80 (d, J_{PH} = 9.1, 18H), -1.42 (d, J_{PH} = 1.3, 2H). ³¹P{¹H} NMR (THF): δ 45.3.

(t-Bu)₂PCH₃ In the dry box 29.66 g of (t-Bu)₂PCl was diluted with ∼50 mL of Et₂O and added to a 500 mL round bottom Schlenk flask. A dropping funnel was charged with 152.5 mL of methyl lithium and added dropwise to the stirred solution of (t-Bu)₂PCl over a 2 h period. As the addition continued the reaction mixture turned from a colorless, homogeneous solution to a yellow solution with a white precipitate. After addition was complete the dropping funnel was replaced with a suba seal and the mixture allowed to stir overnight. The flask was then removed from the drybox, attached to a Schlenk line, cooled to 0°C, and 5.0 mL of degassed H₂O was carefully added via syringe over a 20 min period, followed by an additional 50 mL of degassed H₂O. A biphasic solution resulted. The organic layer was transferred via cannula to a 500 mL round bottom Schlenk flask containing ∼10 g of MgSO₄. The aqueous layer was extracted with ∼100 mL of degassed petroleum. The flask containing the combined organic layers was fitted with a glass stopper, cooled to -10°C, and the volatile materials removed using a Schlenk line. The flask was then transferred to a dry box and the pale yellow residue filtered through a thin pad of Celite®. The MgSO₄ and Celite ® were washed with an additional 15 mL of Et₂O and the washings added to the initial filtrate, then transferred to a 50 mL Schlenk flask. The flask was removed from the box, attached to a Schlenk line, cooled to 0°C to remove the Et₂O, then fitted with a distillation head. The residue was distilled under static vacuum (Variac® setting 40) into a receiving cooled in liquid N₂, yielding a 26.3 g (89.1 % yield) of a clear distillate. ¹H NMR (C₆D₆): δ1.03 (d, J_{PH} = 10.8, 18H), 0.82 (d, J_{PH} = 4.7, 3H). ¹³C{¹H} NMR (C₆D₆): d 30.26 (d, J_{PC} = 21.95), 29.29 (d, J_{PC} = 13.92), 4.20 (d, J_{PC} = 25.1). ³¹P{¹H} NMR (hexanes): δ 12.3

### Experiment 2

### Synthesis of (t-Bu₂PCH₂P-t-Bu₂)NiBr₂

(DME)NiBr₂ (0.250 g, 0.810 mmol) was suspended in 20 mL of CH₂Cl₂ under nitrogen. To this mixture was added t-Bu₂PCH₂P-t-Bu₂ (0.247 g, 0.810 mmol). A purple solution slowly formed. The reaction mixture was stirred at ambient temperature for 15.5 h. It was then filtered, and the filtrate concentrated to dryness *in vacuo* to afford a red-purple powder. Recrystallization from CH₂Cl₂/pentane at -40°C afforded 0.336 g of(t-Bu₂PCH₂P-t-Bu₂)NiBr₂ as a purple, crystalline solid (79%). ¹H NMR δ 2.71 (t, 2H, CH₂), 1.70 (mult, 36H, t-Bu); ¹³P NMR (CDCl₃) δ-6.42.

### Example 7

An evacuated 100 mL autoclave was charged with a slurry of (t-Bu₂PCH₂P-t-Bu₂)NiBr₂ (52 mg, 0.10 mmol) in 40 mL of toluene under nitrogen. To this mixture was then added modified methyl aluminoxane (5.00 mmol) in toluene (10 mL) under 690 kPa of ethylene. The resulting reaction mixture was stirred at approximately 700 rpm under 690 kPa of ethylene for 24 h. During this time the reaction temperature remained at 26-28°C. Ethylene pressure was then vented and the reaction mixture quenched under air by the addition of 50 mL of isopropanol. The resulting mixture was then stirred in a beaker with 100 mL of methanol plus 10 mL concentrated HCl. Finally, 100 mL of water was added and an oil separated from the solution. The mixture was then transferred to a separatory funnel and the oil separated from the aqueous phase. The aqueous phase was extracted with 3 x 100 mL of hexane, and the hexane extracts combined with the oil. The resulting solution was dried (MgSO₄) and concentrated *in vacuo* to afford 10.4 g of amorphous polyethylene as a viscous, clear, colorless oil. The branching distribution was quantified by ¹³C NMR. Branching per 1000 CH₂: Total methyl-ended branches (143.6), Methyl (86.4), Ethyl(22.3), Propyl (1.3), Butyl (9.2), Amyl (0.8), ≥Hex and end of chains (21.2), ≥Am and end of chains (23.9), ≥Bu and end of chains (33.1). GPC (TCB vs. linear PE): Mₙ = 3,410; M_{w} = 7,860; M_{w}/Mₙ = 2.3

### Experiment 3

### Synthesis of (P-t-Bu₃)NiBr₂

(DME)NiBr₂ (0.500 g, 1.62 mmol) was suspended in 20 mL of CH₂Cl₂ under nitrogen. To this mixture was added P-t-Bu₃ (0.328 g, 1.62 mmol). An emerald-green solution slowly formed. The reaction mixture was stirred at ambient temperature for 19 h. It was then filtered, and the filtrate concentrated to dryness *in vacuo* to afford a green solid. Recrystallization from CH₂Cl₂ at -40°C afforded 0.260 g of (P¹Bu₃)NiBr₂ as a green powder (38%).

### Example 8

An evacuated 100 mL autoclave was charged with a solution of (P-t-Bu₃)NiBr₂ (42 mg, 0.10 mmol) in 40 mL of toluene under nitrogen. To this mixture was then added modified methyl aluminoxane (5.00 mmol) in toluene (10 mL) under 690 kPa of ethylene. The resulting reaction mixture was stirred at 700 rpm under 100 psi of ethylene for 35 min. The reaction temperature increased from 24 to 50°C during the first 2 min of the reaction; thereafter it slowly decreased until it was 32°C after 35 min. Ethylene pressure was vented and the reaction mixture quenched under air by the addition of 50 mL of isopropanol. The resulting mixture was then stirred in a beaker with 100 mL of methanol plus 10 mL concentrated HC1. The precipitated polymer was filtered off, washed with methanol, and dried to afford 4.91 g of polyethylene. The branching distribution was quantified by ¹³C NMR. Branching per 1000 CH₂: Total methyl-ended branches (7.5), Methyl (2.1), Ethyl (2.4), Propyl (0.3), Butyl (0.4), Amyl (0.7), ≥ Hex and end of chains (4), ≥Am and end of chains (2.3), ≥Bu and end of chains (2.7). DSC: Tₘ = 127.2°C (152 J/g). GPC (in TCB vs. linear PE): Mₙ = 9.580; M_{w} = 45600; M_{w}/Mₙ = 4.76

### Example 9

An evacuated 100 mL autoclave was charged with a solution of (P-t-Bu₃)NiBr₂ (42 mg, 0.100 mmol) and norbornene (3.00 g, 31.9 mmol) in 40 mL of toluene under nitrogen. To this mixture was then added modified methyl aluminoxane (10.00 mmol) in toluene (10 mL) under 350 kPa of ethylene. The resulting reaction mixture was stirred at 600 rpm under 350 kPa of ethylene for 6 min. The reaction temperature increased from 31 to 61°C during the first 3 min of the reaction; thereafter it decreased until it was 57°C after 6 min. Ethylene pressure was vented and the reaction mixture quenched under air by the addition of 50 mL of isopropanol. The resulting mixture was then stirred in a beaker with 100 mL of methanol plus 10 mL concentrated HCl. The precipitated polymer was filtered off, washed with methanol, and dried to afford 8.80 g of ethylene/norbornene copolymer. Quantitative ¹³C NMR indicated the copolymer to contain 9 mole % norbornene and 91 mole % ethylene units. In addition, the following branches (per 1000 CH₂'s) were detected by ¹³C NMR: Total methyl-ended branches (4.1), Methyl (1.2), Ethyl(1.1), Propyl (.1), Butyl (.3), Amyl (3.1), ≥Hex and end of chains (7.1), ≥Am and end of chains (1.3), ≥Bu and end of chains (1.7). DSC: Tₘ = 109, 115°C (43 J/g). GPC (in TCB vs. linear PE): Mₙ = 3,390; M_{w} = 13,500; M_{w}/Mₙ = 3.98.

### Example 10

An evacuated 100 mL autoclave was charged with a solution of (P-t-Bu₃)NiBr₂ (42 mg, 0.100 mmol) and norbornene (6.00 g, 63.7 mmol) in 40 mL of toluene under nitrogen. To this mixture was then added modified methyl aluminoxane (10.00 mmol) in toluene (10 mL) under 690 kPa of ethylene. The resulting reaction mixture was stirred at 600 rpm under 690 kPa of ethylene for 8 min. The reaction temperature increased from 27 to 53°C during the course of the reaction. Ethylene pressure was vented and the reaction mixture quenched under air by the addition of 50 mL of isopropanol. The resulting mixture was then stirred in a beaker with 200 mL of methanol plus 10 mL concentrated HCl. The precipitated polymer was filtered off, washed with methanol, and dried to afford 11.21 g of ethylene/norbornene copolymer. Quantitative ¹³C NMR indicated the copolymer to contain 15 mole % norbornene and 85 mole % ethylene units. In addition, the following branches (per 1000 CH₂'s) were detected by ¹³C NMR: Total methyl-ended branches (3.5), Ethyl (1.4), Propyl (.5), Butyl (.2), Amyl (.2), ≥Hex and end of chains (5.8), ≥Am and end of chains (1.5), ≥Bu and end of chains (2). DSC: Tₘ = 65°C (40 J/g). GPC (in TCB vs. linear PE): Mₙ = 1,460; M_{w} = 5,300; M_{w}/Mₙ = 3.64.

### Example 11

An evacuated 100 mL autoclave was charged with a solution of (P-t-Bu₃)NiBr₂ (5 mg, 0.012 mmol) and norbornene (10.00 g, 106.2 mmol) in 40 mL of toluene under nitrogen. To this mixture was then added modified methyl aluminoxane (10.00 mmol) in toluene (10 mL) under 140 kPa of ethylene. The resulting reaction mixture was stirred at 600 rpm under 140 kPa of ethylene for 22 min. The reaction temperature remained constant at 30°C during the course of the reaction. Ethylene pressure was then vented. Methanol/HCl workup afforded 3.82 g of ethylene/norbornene copolymer. Quantitative ¹³C NMR indicated the copolymer to contain 85 mole % norbornene and 15 mole % ethylene units. No branching could be detected by ¹³C NMR. GPC (in TCB vs. linear PE): Mₙ = 5,295; M_{w} = 33,000; M_{w}/Mₙ = 6.29.

### Example 12

An evacuated 100 mL autoclave was charged with a solution of Ni(acac)₂ (26 mg, 0.100 mmol), t-Bu₃P (40 mg, 0.200 mmol) and the dimethyl ester of endo-5-norbornene-2,3-dicarboxylic acid (3.00 g, 14.27 mmol) in 40 mL of toluene under nitrogen. To this mixture was then added modified methyl aluminoxane (20.00 mmol) in toluene (10 mL) under 350 kPa of ethylene. The resulting reaction mixture was stirred at 700 rpm under 50 psi of ethylene for 17 h at ambient temperature (∼25-30°C). Ethylene pressure was then vented. Methanol/HCl workup afforded 0.640 g of copolymer. Quantitative ¹³C NMR indicated the copolymer to contain 1.36 mole % of the norbornene diester. In addition, the following branches (per 1000 CH₂'s) were detected by ¹³C NMR: Total methyl-ended branches (14.4), Methyl (8.8), Ethyl(.7), ≥Am and end of chains (5.8), ≥Bu and end of chains (5).

### Example 13

A 100 mL autoclave was charged with a solution of Ni(acac)₂ (18 mg, 0.070 mmol), P-t-Bu₃ (29 mg, 0.143 mmol), 1-hexene (2.50 g, 29.7 mmol), and toluene (40 mL). To this mixture was then added modified methyl aluminoxane (3.5 mmol) in toluene (10 mL) under 690 kPa of ethylene. The reaction mixture was stirred under 690 kPa of ethylene for 15 min, during which time the reaction temperature varied between 29 and 41°C. Ethylene pressure was then vented and the reaction mixture quenched by addition of 50 mL of isopropanol under air. The resulting mixture was transferred to a beaker with 200 mL methanol plus 10 mL concentrated HCl. The precipitated polymer was filtered, washed further with methanol, and dried to afford 3.43 g of ethylene/1-hexene copolymer as a sticky, waxy solid. GPC (trichlorobenzene vs. linear polyethylene, 135°C): Mₙ = 2,330; M_{w} = 5,970; PD = 2.36. Quantitative ¹³C NMR indicated that this sample contained 72.6 methyl-ended branches per 1000 methylenes. The distribution of branches was as follows (branches per 1000 methylenes): Methyl (4.1), Ethyl (6.6), Propyl (1), Butyl (55.3), Amyl (.3),≥Hex and end of chains (4.6), ≥Am and end of chains (8.9), ≥Bu and end of chains (59.7).

## Claims

1. A process for the manufacture of a polyolefin, comprising forming a polymerization catalyst system by contacting in an inert liquid:
a first compound of the formula NiAQ (I) or L⁵L⁶NiAQ (VIII);
a second compound of the formula (t-butyl)₂PEP(t-butyl)₂ (II) or (t-butyl)₃P (III); and
a third compound W (IV), which is a neutral Lewis acid capable of abstracting A⁻ or Q⁻ to form the anion WA⁻ or WQ⁻, provided that WA⁻ or WQ⁻ is a weakly coordinating anion;
and contacting said polymerization catalyst system with ethylene or a mixture of ethylene and an α-olefin, internal olefin, cyclopentene, a norbornene, or a styrene, provided that:
said contacting with ethylene or a mixture of ethylene and cyclopentene, a norbornene, or a styrene is carried out at a temperature of about -20°C to about +70°C;
when (t-butyl)₃P is present, one or more of an α-olefin, internal olefin, a styrene, a norbornene, or cyclopentene is also present;
when neither of Q and A are hydrocarbyl or hydride, W is capable of transferring a hydrocarbyl or hydride group to Ni;
and wherein:
L⁵ and L⁶ are each independently monodentate weakly coordinating neutral ligands or L⁵ and L⁶ taken together are a bidentate weakly coordinating neutral ligand;
Q is a monovalent anion;
A is monovalent anion; and
E is -CH₂-, -O-, or -NH-.

2. A process for the manufacture of a polyolefin, comprising contacting in an inert liquid at a temperature of about -20°C to about +70°C, a compound of the formula [L¹L²L³L⁴Ni]⁺X⁻ (VI) with ethylene or ethylene and an α-olefin, internal olefin, cyclopentene, a norbornene, or a styrene, wherein:
L¹ and L² taken together are (t-butyl)₂PEP(t-butyl)₂ (II), or L¹ and L² are both (t-butyl)₃P (III), or L¹ is (t-butyl)₃P (III) and L² is an empty coordination site, ethylene or a neutral monodentate ligand that can be displaced by ethylene;
E is -CH₂-, -O-, or -NH-;
L³ and L⁴ taken together are a π-allyl or a π-benzyl group; or L³ is ethylene and L⁴ is monoanionic -R¹R²; or L³ is a monoanionic group which may add across ethylene, and L⁴ is a neutral coordinating group which may be displaced by ethylene or L⁴ is an empty coordination site about nickel; or L³ and L⁴ taken together are a monoanionic oligomeric agostic group;
X is a relatively noncoordinating anion;
R¹ is a polymeric alkylene group; and
R² is a polymer end group;
and provided that when (t-butyl)₃P is present one or more of an α-olefin, internal olefin, cyclopentene, a norbornene, or a styrene is also present.

3. A compound of the formula [L¹L²L³L⁴Ni]⁺X⁻ (VI) wherein:
L¹ and L² taken together are (t-butyl)₂PEP(t-butyl)₂ (II), L¹ and L² are both (t-butyl)₃P (III), or L¹ is (t-butyl)₃P (III) and L² is an empty coordination site, ethylene or a neutral monodentate ligand that can be displaced by ethylene;
E is -CH₂-, -O-, or -NH-;
L³ and L⁴ taken together are a π-allyl or a π-benzyl group; or L³ is ethylene and L⁴ is monoanionic -R¹R²; or L³ is a monoanionic group which may add across ethylene, and L⁴ is a neutral coordinating group which may be displaced by ethylene or L⁴ is an empty coordination site about nickel; or L³ and L⁴ taken together are a monoanionic oligomeric agostic group;
X is a relatively noncoordinating anion;
R¹ is a polymeric alkylene group; and
R² is a polymer end group;
and provided that when (t-butyl)₃P is present, a repeat unit derived from one or more of α-olefin, internal olefin, cyclopentene, a norbornene, or a styrene is also present in R¹.

4. A polyolefin containing ethyl branches, wherein at least 53 percent of said ethyl branches are part of sec-butyl ended branches, and provided that said polyolefin has at least 50 branches per 1000 methylene groups.

5. A homopolyethylene in which at least 53 percent of alkyl branches are ethyl branches, and provided that said ethylene has at least about 1.0 branch per 1000 methylene groups.

6. The process as recited in claim 1 wherein A and Q are chloride, bromide, carboxylate or acetylacetonate.

7. The process as recited in claim 1 wherein said first compound is (VIII) and one or both of A and Q are each independently hydride or methyl.

8. The process as recited in claim 1 wherein E is -CH₂-.

9. The process as recited in claim 1 wherein W is an alkylaluminum compound.

10. The process as recited in claim 2 wherein E is -CH₂-.

11. The compound as recited in claim 3 wherein E is -CH₂-.

12. The process as recited in claim 2 wherein A and Q are chloride, bromide, carboxylate or acetylacetonate.

13. The process as recited in claim 1 wherein at least one more polymerization catalyst is present.

14. The process as recited in claim 2 wherein at least one more polymerization catalyst is present.

15. A copolymer of one or more norbornenes and ethylene containing at least about 2.0 methyl groups which are branch ends per one thousand methylene groups.

16. The polyolefin as recited in claim 4 which is a homopolyethylene.

## Revendications

1. Procédé pour la fabrication d'une polyoléfine, comprenant la formation d'un système de catalyseur de polymérisation en mettant en contact dans un liquide inerte:
un premier composé de la formule NiAQ (I) ou L⁵L⁶NiAQ (VIII);
un deuxième composé de la formule (t-butyl)₂PEP(t-butyl)₂ (II) ou (t-butyl)₃P (III); et
un troisième composé W (IV), qui est un acide de Lewis neutre capable d'extraire A⁻ ou Q⁻ pour former l'anion WA⁻ ou WQ⁻, à condition que WA⁻ ou WQ⁻ soit un anion faiblement coordinant;
et la mise en contact dudit système de catalyseur de polymérisation avec de l'éthylène ou un mélange d'éthylène et d'une α-oléfine, d'une oléfine interne, de cyclopentène, d'un norbornène ou d'un styrène, à condition que:
ladite mise en contact avec de l'éthylène ou un mélange d'éthylène et de cyclopentène, d'un norbomène ou d'un styrène soit réalisée à une température d'environ -20°C à environ +70°C;
lorsque du (t-butyl)₃P est présent, un ou plusieurs composés parmi une α-oléfine, une oléfine interne, un styrène, un norbornène ou du cyclopentène soient également présents;
lorsque ni Q, ni A n'est un groupe hydrocarbyle ou hydrure, W soit capable de transférer un groupe hydrocarbyle ou hydrure vers Ni;
et dans lequel:
L⁵ et L⁶ sont chacun indépendamment des ligands neutres monodentés faiblement coordinants ou L⁵ et L⁶ pris ensemble sont un ligand neutre bidenté faiblement coordinant;
Q est un anion monovalent;
A est un anion monovalent; et
E est -CH₂-, -O- ou -NH-.

2. Procédé pour la fabrication d'une polyoléfine, comprenant la mise en contact dans un liquide inerte à une température d'environ -20°C à environ +70°C d'un composé de la formule [L¹L²L³L⁴Ni]⁺X⁻ (VI) avec de l'éthylène ou un éthylène et une α-oléfine, une oléfine interne, du cyclopentène, un norbornène ou un styrène, dans lequel:
L¹ et L² pris ensemble sont du (t-butyl)₂PEP(t-butyl)₂ (II) ou L¹ et L² sont tous les deux du (t-butyl)₃P (III) ou L¹ est du (t-butyl)₃P (III) et L² est un site de coordination vide, un éthylène ou un ligand monodenté neutre qui peut être remplacé par de l'éthylène;
E est -CH₂-, -O- ou -NH-;
L³ et L⁴ pris ensemble sont un groupe π-allyle ou π-benzyle; ou L³ est un éthylène et L⁴ est un groupe -R¹R² monoanionique; ou L³ est un groupe monoanionique qui peut ajouter en travers de l'éthylène, et L⁴ est un groupe de coordination neutre qui peut être remplacé par de l'éthylène, ou L⁴ est un site de coordination vide autour du nickel; ou L³ et L⁴ pris ensemble sont un groupe agostique oligomère monoanionique;
X est un anion relativement non coordinant;
R¹ est un groupe alkylène polymère; et
R² est un groupe d'extrémité de polymère;
et à condition que, lorsque du (t-butyl)₃P est présent, un ou plusieurs composés parmi une α-oléfine, une oléfine interne, du cyclopentène, un norbornène ou un styrène soient également présents.

3. Composé de la formule [L¹L²L³L⁴Ni]⁺X⁻ (VI), dans laquelle:
L¹ et L² pris ensemble sont du (t-butyl)₂PEP(t-butyl)₂ (II), L¹ et L² sont tous les deux du (t-butyl)₃P (III) ou L¹ est du (t-butyl)₃P (III) et L² est un site de coordination vide, un éthylène ou un ligand monodenté neutre qui peut être remplacé par de l'éthylène;
E est -CH₂-, -O- ou -NH-;
L³ et L⁴ pris ensemble sont un groupe π-allyle ou π-benzyle; ou L³ est un éthylène et L⁴ est un groupe -R¹R² monoanionique; ou L³ est un groupe monoanionique qui peut ajouter en travers de l'éthylène, et L⁴ est un groupe de coordination neutre qui peut être remplacé par de l'éthylène, ou L⁴ est un site de coordination vide autour du nickel; ou L³ et L⁴ pris ensemble sont un groupe agostique oligomère monoanionique;
X est un anion relativement non coordinant;
R¹ est un groupe alkylène polymère; et
R² est un groupe d'extrémité de polymère;
et à condition que, lorsque du (t-butyl)₃P est présent, une unité de répétition dérivée d'un ou de plusieurs composés parmi une α-oléfine, une oléfine interne, du cyclopentène, un norbornène ou un styrène soit également présente dans R¹.

4. Polyoléfine contenant des ramifications d'éthyle, dans laquelle au moins 53 pour-cent desdites ramifications d'éthyle font partie des ramifications terminées par un groupe sec-butyle et à condition que ladite polyoléfine contienne au moins 50 ramifications pour 1000 groupes méthylènes.

5. Homopolyéthylène, dans lequel au moins 53 pour-cent de ramifications d'alkyle sont des ramifications d'éthyle et à condition que ledit éthylène contienne au moins environ 1,0 ramification pour 1000 groupes méthylènes.

6. Procédé suivant la revendication 1, dans lequel A et Q sont des chlorures, des bromures, des carboxylates ou des acétylacétonates.

7. Procédé suivant la revendication 1, dans lequel ledit premier composé est (VIII) et un parmi A et Q ou les deux sont chacun indépendamment un hydrure ou un groupe méthyle.

8. Procédé suivant la revendication 1, dans lequel E est -CH₂-.

9. Procédé suivant la revendication 1, dans lequel W est un composé d'alkylaluminium.

10. Procédé suivant la revendication 2, dans lequel E est -CH₂-.

11. Composé suivant la revendication 3, dans lequel E est -CH₂-.

12. Procédé suivant la revendication 2, dans lequel A et Q sont des chlorures, des bromures, des carboxylates ou des acétylacétonates.

13. Procédé suivant la revendication 1, dans lequel au moins un catalyseur de polymérisation de plus est présent.

14. Procédé suivant la revendication 2, dans lequel au moins un catalyseur de polymérisation de plus est présent.

15. Copolymère d'un ou de plusieurs norbornènes et d'éthylène contenant au moins environ 2,0 groupes méthyles qui sont des extrémités de ramifications pour mille groupes méthylènes.

16. Polyoléfine suivant la revendication 4, qui est un homopolyéthylène.

## Patentansprüche

1. Verfahren für die Herstellung eines Polyolefins, umfassend Erzeugen eines Polymerisationskatalysatorsystems durch Inkontaktbringen in einer inerten Flüssigkeit:
einer ersten Verbindung mit der Formel NiAQ (I) oder L⁵L⁶iAQ (VIII);
einer zweiten Verbindung mit der Formel (t-Butyl)₂PEP(t-butyl)₂ (II) oder (t-Butyl)₃P (III); und
einer dritten Verbindung W (IV), welche eine neutrale Lewissäure ist, die imstande ist, A⁻ oder Q⁻ zu entziehen, wobei das Anion WA⁻ oder WQ⁻ erzeugt wird, mit der Maßgabe, daß WA⁻ oder WQ⁻ ein schwach koordinierendes Anion ist;
und Inkontaktbringen des Polymerisationskatalysatorsystems mit Ethylen oder einem Gemisch von Ethylen und einem α-Olefin, inneren Olefin, Cyclopenten, einem Norbornen oder einem Styrol, mit der Maßgabe, daß:
das Inkontaktbringen mit Ethylen oder einem Gemisch von Ethylen und Cyclopenten, einem Norbornen oder einem Styrol bei einer Temperatur von etwa -20°C bis etwa +70°C ausgeführt wird;
wenn (t-Butyl)₃P vorhanden ist, ein oder mehrere von einem α-Olefin, inneren Olefin, einem Styrol, einem Norbornen oder Cyclopenten ebenfalls vorhanden sind;
wenn keines von Q und A Hydrocarbyl oder Hydrid ist, W imstande ist, eine Hydrocarbyl- oder Hydridgruppe auf Ni zu übertragen;
und wobei:
L⁵ und L⁶ jeder unabhängig einzähnige schwach koordinierende neutrale Liganden sind oder L⁵ und L⁶ zusammengenommen ein zweizähniger schwach koordinierender neutraler Ligand sind;
Q ein monovalentes Anion ist;
A monovalentes Anion ist; und
E -CH₂-, -O- oder -NH- ist.

2. Verfahren für die Herstellung eines Polyolefins, umfassend Inkontaktbringen in einer inerten Flüssigkeit bei einer Temperatur von etwa -20°C bis etwa +70°C einer Verbindung mit der Formel [L¹L²L³L⁴Ni]⁺X⁻ (VI) mit Ethylen oder Ethylen und einem α-Olefin, inneren Olefin, Cyclopenten, einem Norbornen oder einem Styrol, wobei:
L¹ und L² zusammengenommen (t-Butyl)₂PEP(t-butyl)₂ (II) sind, oder L¹ und L² beide (t-Butyl)₃P (III) sind, oder L¹ (t-Butyl)₃P (III) ist und L² eine leere Koordinationsstelle, Ethylen oder ein neutraler einzähniger Ligand ist, der durch Ethylen ersetzt werden kann;
E -CH₂-, -O- oder -NH- ist;
L³ und L⁴ zusammengenommen eine π-Allyl- oder eine π-Benzylgruppe sind; oder L³ Ethylen ist und L⁴ monoanionisches -R¹R² ist; oder L³ eine monoanionische Gruppe ist, welche über Ethylen hinzugefügt werden kann, und L⁴ eine neutrale koordinierende Gruppe ist, welche durch Ethylen ersetzt werden kann, oder L⁴ eine leere Koordinationsstelle über Nickel ist; oder L³ und L⁴ zusammengenommen eine monoanionische oligomere agostische Gruppe sind;
X ein relativ nichtkoordinierendes Anion ist;
R¹ eine polymere Alkylengruppe ist; und
R² eine Polymerendgruppe ist;
und mit der Maßgabe, daß, wenn (t-Butyl)₃P vorhanden ist, ein oder mehrere von einem α-Olefin, inneren Olefin, Cyclopenten, einem Norbornen oder einem Styrol ebenfalls vorhanden sind.

3. Verbindung mit der Formel [L¹L²L³L⁴Ni]⁺X⁻ (VI), wobei:
L¹ und L² zusammengenommen (t-Butyl)₂PEP(t-butyl)₂ (II) sind, L¹ und L² beide (t-Butyl)₃P (III) sind oder L¹ (t-Butyl)₃P (III) ist und L² eine leere Koordinationsstelle, Ethylen oder ein neutraler einzähniger Ligand ist, der durch Ethylen ersetzt werden kann;
E -CH₂-, -O- oder -NH- ist;
L³ und L⁴ zusammengenommen eine π-Allyl- oder eine π-Benzylgruppe sind; oder L³ Ethylen ist und L⁴ monoanionisches -R¹R² ist; oder L³ eine monoanionische Gruppe ist, welche über Ethylen hinzugefügt werden kann, und L⁴ eine neutrale koordinierende Gruppe ist, welche durch Ethylen ersetzt werden kann, oder L⁴ eine leere Koordinationsstelle über Nickel ist; oder L³ und L⁴ zusammengenommen eine monoanionische oligomere agostische Gruppe sind;
X ein relativ nichtkoordinierendes Anion ist;
R¹ eine polymere Alkylengruppe ist; und
R² eine Polymerendgruppe ist;
und mit der Maßgabe, daß, wenn (t-Butyl)₃P vorhanden ist, eine Grundeinheit, abgeleitet von einem oder mehreren von α-Olefin, innerem Olefin, Cyclopenten, einem Norbornen oder einem Styrol, ebenfalls in R¹ vorhanden ist.

4. Polyolefin, enthaltend Ethylverzweigungen, wobei mindestens 53 Prozent der Ethylverzweigungen Teil von Verzweigungen mit sec-Butyl-Ende sind, und mit der Maßgabe, daß das Polyolefin mindestens 50 Verzweigungen pro 1000 Methylengruppen hat.

5. Homopolyethylen, bei welchem mindestens 53 Prozent von Alkylverzweigungen Ethylverzweigungen sind, und mit der Maßgabe, daß das Ethylen mindestens etwa 1,0 Verzweigungen pro 1000 Methylengruppen aufweist.

6. Verfahren nach Anspruch 1, wobei A und Q Chlorid, Bromid, Carboxylat oder Acetylacetonat sind.

7. Verfahren nach Anspruch 1, wobei die erste Verbindung (VIII) ist und eines oder beide von A und Q jeder unabhängig Hydrid oder Methyl sind.

8. Verfahren nach Anspruch 1, wobei E -CH₂- ist.

9. Verfahren nach Anspruch 1, wobei W eine Alkylaluminumverbindung ist.

10. Verfahren nach Anspruch 2, wobei E -CH₂- ist.

11. Verbindung nach Anspruch 3, wobei E -CH₂- ist.

12. Verfahren nach Anspruch 2, wobei A und Q Chlorid, Bromid, Carboxylat oder Acetylacetonat sind.

13. Verfahren nach Anspruch 1, wobei mindestens ein Polymerisationskatalysator mehr vorhanden ist.

14. Verfahren nach Anspruch 2, wobei mindestens ein Polymerisationskatalysator mehr vorhanden ist.

15. Copolymer von einem oder mehreren Norbornenen und Ethylen, enthaltend mindestens etwa 2,0 Methylgruppen, welche Verzweigungsenden pro eintausend Methylengruppen sind.

16. Polyolefin nach Anspruch 4, welches ein Homopolyethylen ist.
